# FASCICULE DE BREVET EUROPEEN

(11) **EP 0 423 035 B1**
(45) Date de publication et mention de la délivrance du brevet: **07.12.1994**
(21) Numéro de dépôt: 90402846.1
(22) Date de dépôt: 11.10.1990
(51) Int. Cl.: G07F 7/08

(54) **Système de paiement ou de transfert d'informations par carte à mémoire électronique porte-monnaie**
System zum Bezahlen oder Transferieren von Informationen mit einer als Geldbörse dienenden elektronischen Speicherkarte
Payment or information transfer system using an electronic memory card as wallet

(30) Priorité: 13.10.1989 FR 8913449
(43) Date de publication de la demande: 17.04.1991
(73) Titulaire: GEMPLUS CARD INTERNATIONAL, F-13420 Gémenos (FR)
(72) Inventeur: Le Roux, Jean-Yves, Cabinet Ballot-Schmit, F-75116 Paris (FR)
(74) Mandataire: Schmit, Christian Norbert Marie

(56) Documents cités:
- EP-A- 0 257 596
- EP-A- 0 305 004
- DE-A- 3 211 568
- DE-A- 3 406 615
- FR-A- 2 386 080
- GB-A- 2 143 355
- GB-A- 2 154 346

## Description

La présente invention a pour objet un système de paiement par carte à mémoire électronique porte-monnaie. Elle concerne essentiellement le domaine de la monétique dans lequel, pour éviter le vol d'argent, et surtout aussi pour simplifier les opérations bancaires, on utilise les paiements de type électronique au moyen de cartes à mémoire. Elle peut néanmoins trouver son application dans d'autres domaines, en particulier lorsque des informations numériques doivent être transportées et que l'on veut éviter, ou tout du moins savoir, si ces informations ont été transformées entre l'endroit où elles ont été émises par un émetteur et l'instant où elles sont reçues par leur véritable destinataire.

On connaît les systèmes de paiement de type électronique dans lequel il est fait usage d'une carte à puce. De tels systèmes sont par exemple décrits dans FR-A-2 386 080 ou dans DE-A-3 211 568. La carte à puce est essentiellement caractérisée par la présence d'un microprocesseur. Dans cette carte ce microprocesseur joue un rôle de sécurité évident. En effet, dans une telle carte, un tel microprocesseur est capable de mettre en oeuvre un algorithme complexe de calcul ou de vérification d'un code secret à partir d'une donnée d'identification qu'on lui indique. Après avoir introduit cette carte à puce dans un lecteur, si le code secret calculé n'est pas équivalent à un code secret déjà contenu dans la carte, l'opération avec cette carte devient impossible, sachant que dans ce cas la donnée d'identification est fausse. Dans un perfectionnement le nombre d'opérations ou de tentatives pour aboutir au bon code secret est même limité. Par exemple, au delà de trois opérations la carte à puce tombe dans une trappe en sortie arrière du lecteur de carte à puce. Elle n'est même pas restituée à son utilisateur.

Ce système donne satisfaction, surtout compte tenu de l'utilisation d'algorithmes de type D E S ( data enscription standard, en littérature anglo-saxonne) dont la complexité est telle qu'elle nécessiterait plusieurs années de travail à un fraudeur pour en démonter le mécanisme. Ces cartes à puce présentent cependant l'inconvénient qu'elles doivent comporter le microprocesseur et qu'en définitive leur coût est alors élevé.

Dans l'invention, on résout ces problèmes en utilisant une carte à mémoire ne comportant pas nécessairement de microprocesseur. Essentiellement la carte à mémoire comporte différents types de zones : au moins quatre types différents. Ces zones peuvent éventuellement être de technologies différentes (EPROM, EEPROM...) du moment qu'elles ne sont pas volatiles. D'une manière simplifiée, la carte mémoire de l'invention comporte même des zones qui sont toutes entièrement lisibles, seule l'une d'entre elles n'est pas réinscriptible. Il s'agit d'une zone dite identité, spécifique de la carte, de manière à éviter que deux cartes puissent être totalement identiques : l'une étant un clone de l'autre par duplication. Le principe de l'invention est le suivant.

On considère que, lorsqu'un utilisateur se sert de sa carte et qu'il effectue par exemple une opération bancaire, il est possible de compter ces opérations. On sait par ailleurs, que les opérations bancaires ont pour objet de modifier le solde. Par ailleurs, la carte étant personnalisée elle comporte des indications spécifiques concernant l'identité de son porteur. La carte peut éventuellement aussi comporter un code secret d'accès connu de l'utilisateur. Dans ces conditions, à chaque utilisation, dans l'invention on calcule une signature numérique qui est une fonction de l'identité, du solde, et du numéro de l'opération bancaire effectuée. Cette identité, ce solde, et ce numéro sont par ailleurs enregistrés dans trois zones distinctes de la carte. Cette signature, qui se présente sous la forme d'une suite binaire d'états logiques, est aussi enregistrée dans une zone particulière de la carte à mémoire sous la forme d'un certificat.

Lors d'une opération suivante, après éventuellement des opérations classiques de validation du titulaire (indication par celui-ci de son code secret et vérification par un lecteur que ce code secret correspond bien à un code secret inscrit dans la carte), on fait calculer par le lecteur, à partir du solde, de l'identité, et du numéro de l'opération enregistrée dans la carte, une signature. Ce calcul de cette signature est le même que celui qui a du être entrepris au moment de l'inscription de la signature en tant que certificat. En conséquence, il est possible de vérifier que la nouvelle signature élaborée est bien la même, ou du moins correspond, à celle enregistrée dans la carte.

Si c'est le cas, on autorise une opération bancaire supplémentaire, à l'issue de laquelle on élabore une nouvelle signature à partir du nouveau solde, de l'identité, et du nouveau numéro d'opération, qui a, entre temps, été incrémenté d'une unité pour tenir compte de l'opération qu'on vient d'effectuer. Cette nouvelle signature est alors enregistrée comme un nouveau certificat dans la carte à mémoire, de préférence en lieu et place de l'ancien. Bien entendu, le lecteur qui calcule la signature est muni d'un algorithme de calcul indéchiffrable, de préférence de type DES. Il en résulte que de cette façon on n'aboutit au même niveau de sécurité qu'avec des cartes à microprocesseur, mais en n'ayant plus affaire qu'à des cartes à mémoires ne contenant que des zones mémoires, sans nécessairement le microprocesseur. Elles sont bien moins chères.

L'invention a donc pour objet un système de paiement par carte à mémoire porte-monnaie comportant des cartes à mémoires porte-monnaie et des terminaux d'interaction pour interagir sur des soldes financiers enregistrés dans ces cartes, Ces cartes à mémoire comportant une zone mémoire d'identité et une zone mémoire solde, le système comportant des moyens pour modifier le solde enregistré dans la zone solde au cours de chaque interaction, caractérisé en ce que
- ces cartes à mémoires comportent au moins chacune deux autres zones de mémorisation différentes : une zone compteur d'interaction, et une zone certificat,
- les terminaux comportent des moyens pour, avant chaque interaction,
- élaborer une signature à partir du solde enregistré dans la zone solde, du contenu du compteur, et de l'identité enregistrée dans la zone d'identité,
- vérifier que cette signature correspond à un certificat enregistré dans la zone certificat de la carte,
- et en ce que ce système comporte en outre des moyens pour, à chaque interaction,
- incrémenter le contenu du compteur d'interaction,
- élaborer une nouvelle signature en fonction du solde modifié, du nouveau contenu du compteur d'interaction et de l'identité,
- et enregistrer la nouvelle signature en tant que nouveau certificat dans la zone certificat.

Dans une application où il ne s'agit plus de transactions financières mais de transfert d'informations, le système sera un système de transfert, ses caractéristiques de sécurité restant les mêmes. Dans ce dernier cas, les terminaux peuvent être différenciés entre ceux qui ne sont que lecteurs et ceux qui ne sont que enregistreurs.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- FIGURE 1 : une représentation schématique du système de l'invention;
- FIGURE 2 : un diagramme montrant les différentes étapes de vérification et d'enregistrement effectuées par un lecteur sur la carte à mémoire de l'invention.

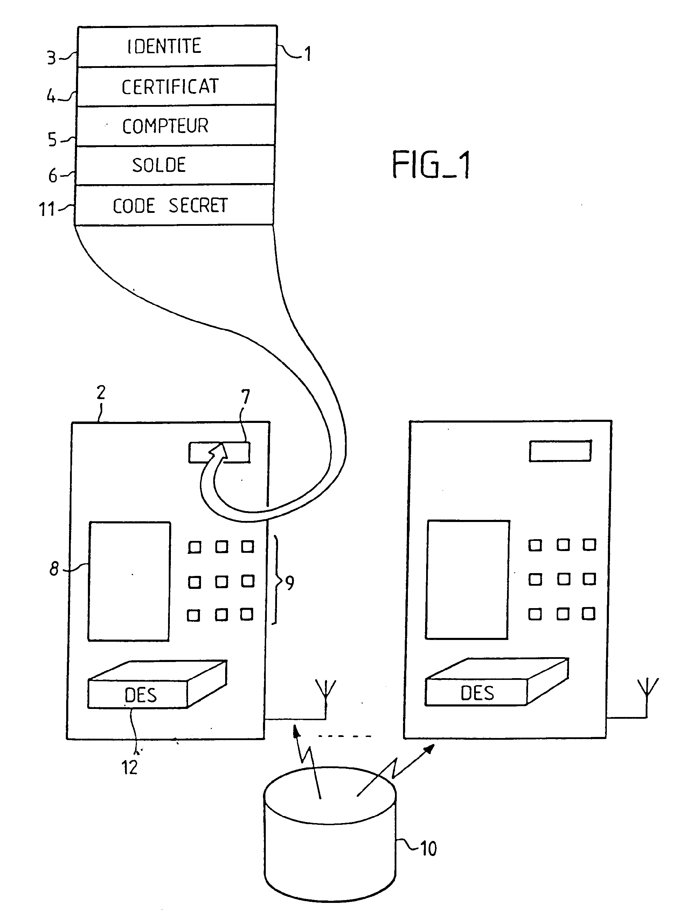

La figure 1 montre un système de paiement par carte à mémoire porte-monnaie selon l'invention. Bien qu'on décrive ici l'application bancaire, on comprendra aisément que l'invention est transposable aux transferts d'informations en général : un solde financier étant une information particulière en soi. Ce système comporte des cartes à mémoire porte-monnaie telle que la carte 1. La carte 1 est destinée à être introduite dans un lecteur 2, ou terminal d'interaction. Ce terminal d'interaction est prévu pour interagir sur des soldes financiers enregistrés dans la carte 1. Lorsqu'il s'agit d'opérations chez des commerçants, en principe au moment des achats, le solde financier doit décroître. Par contre, lorsque le titulaire de la carte se rend à sa banque, il peut faire remplir son porte-monnaie du montant total de son solde bancaire, ou d'une quantité qu'il peut déterminer au choix.

Les cartes à mémoires de l'invention comportent essentiellement quatre zones. Une première zone 3 sert à enregistrer une identité. Cette identité peut correspondre au nom et à l'adresse du titulaire. Elle est spécifique de la carte. Aucune carte ne peut posséder la même identité qu'une autre. La zone 3 ne peut que être lue. Comme on ne peut alors pas l'écrire, on empêche ainsi qu'une identité déjà connue y soit dupliquée. Cette identité est enregistrée dans des cellules de mémoires de la zone mémoire 3. D'une manière préférée, les cellules mémoires de la première zone 3 sont de type EPROM, non effaçables. Les cellules des autres zones sont de préférence de type EEPROM, électriquement effaçables.

La deuxième zone de mémoire 4 comporte un certificat préenregistré. La zone 4 peut être lue et écrite autant de fois qu'on le désire. Une troisième zone 5 concerne un compteur d'interaction. Le contenu d'informations qui est dans la zone 5 renseigne sur le nombre d'opérations effectuées avec la carte depuis le début de la vie de cette carte. L'indication de comptage ne peut ni se remettre à zéro ni se décrémenter. Quand le compteur arrive à son maximum, la carte n'est plus utilisable, il faut en changer. L'empêchement de décrémentation est obtenu par le mécanisme de sécurité du composant lui même. Par exemple, de préférence, la zone compteur 5 est de type jeton : on ne peut que consommer des jetons. Dans ce cas elle est de type EPROM. Elle peut néanmoins être de type EEPROM, effaçable électriquement, mais elle est alors associée à un compteur pour compter le nombre d'effacement et ce compteur est lui alors de type EPROM. La zone 5 peut également être lue et écrite à volonté. Enfin la carte 1 comporte au moins une quatrième zone 6 qui concerne le solde financier, l'argent, dont peut disposer le titulaire.

Ces quatre zones peuvent en pratique être constituées chacune par un nombre limité de cellules mémoires simples. L'ensemble peut correspondre à quelques centaines de bits. L'identité-code secret peut tenir sur quelques dizaines de bits. La signature et le solde peuvent même être de taille logique plus faible. En ce qui concerne le compteur, celui-ci sera de préférence remplacé par un indicateur de comptage. Les opérations de comptage et d'incrémentation sont alors effectuées par le microprocesseur du lecteur. La zone solde peut être une zone à jeton, mais de préférence elle comporte l'indication en clair du solde dans une zone de type EEPROM. D'une manière non impérative la carte 1 peut encore comporter une cinquième zone 11 qui renferme un code secret d'accès connu du titulaire de la carte.

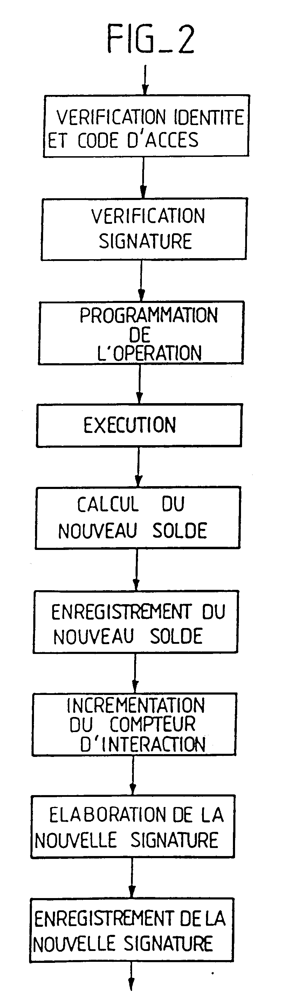

On va décrire maintenant à l'examen de la figure 2 les opérations qui s'exécutent avec la carte à mémoire 1 lorsqu'un titulaire effectue un achat chez un commerçant disposant d'un lecteur tel que 2 adapté à la gestion de ces nouvelles cartes à mémoires. Les opérations sont gérées d'une manière connue par un microprocesseur contenu dans le terminal 2. Lorsque l'achat est déterminé, le titulaire de la carte introduit sa carte dans une fente de lecture 7 du terminal lecteur enregistreur 2. Dans une première opération le lecteur 2 cherche à reconnaître le titulaire. Le lecteur 2 émet alors d'une manière connue, sur un écran de visualisation 8, des questions par lesquelles il est demandé au titulaire de composer son code secret. Celui-ci peut le composer au moyen d'un clavier 9 relié au lecteur. Le code composé par le titulaire est comparé au code secret contenu dans la zone 11 de la carte. Lorsque l'opération de comparaison s'effectue avec succès on passe à une vérification suivante.

Dans celle-ci le lecteur 2 utilise les données numériques représentatives de l'identité (contenue dans la zone 3), de l'état du compteur d'interaction (contenu dans la zone 5), et de l'état du solde (contenu dans la zone 6) pour élaborer une signature. Cette signature est composée par le lecteur en application d'un algorithme de type DES exécuté par un opérateur DES (figure 1). Dès que le lecteur 2 a élaboré cette signature, il vient la comparer à la signature qui est déjà enregistrée préalablement comme certificat dans la carte et qui est actuellement stockée dans la zone 4 de la carte 1. Pour ce faire, le lecteur vient lire le contenu de la zone 4 et le compare dans son comparateur logique à la signature qu'il vient de calculer. Si la comparaison montre que les deux signatures sont égales, on peut passer à l'opération d'achat proprement dite.

Dans ce cas le commerçant, ou éventuellement le client lui-même, peuvent programmer l'opération de défalcation du solde sur le lecteur 2. S'agissant d'une opération d'achat le solde ne peut que décroître. Le lecteur 2 est alors capable de calculer un nouveau solde compte tenu de l'ancien solde et du prix d'achat de l'objet acheté. Ce nouveau solde est alors enregistré en remplacement de l'ancien solde dans la zone 6 par une opération de réécriture. De même, compte tenu de ce que l'on vient d'effectuer une nouvelle opération bancaire financière, on incrémente le contenu du compteur 5 d'une unité. Dans le cas où il s'agit d'un passage à la banque, on agit de même. On compte quand même une unité supplémentaire dans le compteur bien que le solde ait augmenté. En pratique, on peut même décider de modifier le contenu du compteur à chaque fois qu'on est allé inscrire quelque chose comme nouveau solde. Une fois le nouveau solde et la nouvelle valeur du compteur établis, le lecteur élabore à nouveau, avec le même algorithme, une nouvelle signature. Cette nouvelle signature est évidemment différente de la précédente du fait que les conditions de calcul ont changé. Cette nouvelle signature est alors enregistrée comme nouveau certificat dans la zone 4. Comme on peut le voir les quatre zones sont lisibles à volonté. Même, les trois dernières sont modifiables à volonté, le compteur ne pouvant cependant qu'être incrémenté.

Un algorithme de type DES est un algorithme du type de ceux publiés dans "Federal Information Processing Standards Publication" le 15 janvier 1977, et mis à jour le 13 septembre 1983, par le "National Bureau of Standards" américain pages 41009 à 41140. Cet algorithme est paramétrable par une clef de 64 bits. Dans l'application envisagée, tous les lecteurs utilisés seraient munis d'une même version paramétrée de cet algorithme. D'autres algorithmes sont néanmoins possibles.

L'invention confère un peu à la manière des codes correcteurs d'erreur en traitement numérique une intégrité intrinsèque aux enregistrements. C'est ce qui fait dire que ce système est aussi utilisable pour transporter des informations quelconques, autres qu'un solde, en permettant de vérifier qu'elles n'ont pas été modifiées indûment entre leur émission et leur réception. La sécurité provient de la complexité de l'algorithme du calcul de la signature, connu par ailleurs. La simplification de l'invention est apportée par le fait que la carte ne comporte pas nécessairement un microprocesseur. Quand on dit que la carte ne possède pas nécessairement un microprocesseur, on vise également les applications dans lesquelles des cartes à puce avec microprocesseur sont utilisées, mais dans lesquelles le niveau de sécurité des transactions est encore augmenté par mise en oeuvre du système de l'invention.

Les opérations ainsi décrites permettent une grande sécurité puisque l'utilisateur qui voudrait frauder avec sa carte serait incapable de calculer un certificat cohérent à partir d'un contenu de compteur quelconque, et à partir d'un solde que ce fraudeur aurait bien entendu artificiellement augmenté. On peut prévoir alors, en cas d'échec de la vérification de la correspondance entre la nouvelle signature et le certificat, de noter dans une mémoire du lecteur 2 l'identité spécifique de la carte. On peut même décider de bloquer la carte elle-même avec un mécanisme d'autoverrouillage de code secret. Ce mécanisme d'autoverrouillage comporte d'une part un compteur pour compter les mauvaises présentations, et d'autre part un verrouillage dont le principe repose sur la non transmission du code secret, ou de l'identité au delà du seuil de comptage du compteur de mauvaises présentations.

Le système de paiement de l'invention comporte alors de préférence un serveur 1O qui entre périodiquement en relation avec tous les lecteurs 2 de son réseau. Par exemple, un relevé est effectué chaque nuit. Au cours de ce relevé chaque lecteur transmet au serveur 1O les montants des transactions avec les comptes de chacun des titulaires. Par ailleurs il transmet également, en une liste noire, la liste des identités spécifiques des cartes à mémoires ayant provoqué un échec de la vérification de la signature avec leur certificat. Une liste noire concaténée est alors envoyée, avec la même périodicité toutes les nuits, à tous les terminaux d'interaction 2, de telle façon que le lendemain matin chacun d'eux connaisse, dans sa mémoire propre, la liste des identités des cartes à rejeter. Il devient alors impossible aux titulaires de ces cartes de s'en servir pour effectuer une quelconque opération. A cet effet, lors de la première vérification, on compare l'identité de la carte à toutes les identités interdites contenues dans la liste noire.

Pour les cas où un lecteur 2 serait volé, il est possible de le sécuriser par l'utilisation d'une carte à mémoire 12 dite carte de sécurité. Cette carte de sécurité 12, à microprocesseur cette fois, doit être introduite dans le lecteur. Elle comprend l'algorithme DES avec une clef secrète paramétrée associée au système de l'invention. L'utilisation de cette carte, qui permet le calcul des certificats des porte-monnaie, est soumise, à chaque mise sous tension du terminal 2, à la présentation du code porteur de cette carte. Ce code porteur est un code connu par la personne habilitée à utiliser le terminal. Il peut également être composé avec le clavier 9. Cette carte 12 doit être présente en permanence dans le lecteur 2 pour le rendre valide.

En outre, étant donné qu'on transmet tous les soirs la liste des opérations effectuées au serveur, on peut considérer que toute carte, dont le solde a été augmenté, est une carte fraudée si son porteur ne peut présenter la trace et la justification du rechargement.

Compte tenu de ce qu'un lecteur, pour continuer à rester autorisé par le réseau, doit être relié périodiquement au serveur 1O, on conçoit qu'il est facile à ce serveur 10 de vérifier que durant chaque période le lecteur 2 n'a pas effectué d'opérations de type interdit. Par exemple un commerçant ne peut pas effectuer des augmentations de solde sur les cartes qui sont introduites dans son lecteur.

## Revendications

1. Système de paiement par carte à mémoire électronique porte-monnaie comportant des cartes (1) à mémoire porte-monnaie et un ou des terminaux (2) d'interaction pour interagir sur des soldes financiers enregistrés dans ces cartes, ces cartes à mémoire comportant une zone mémoire d'identité (3) et une zone mémoire de solde (6), le système comportant des moyens pour modifier le solde enregistré dans la zone solde au cours de chaque interaction, caractérisé
- en ce que ces cartes à mémoire comportent au moins deux autres zones mémoires différentes: une zone compteur d'interaction (5), et une zone certificat (4),
- en ce que les terminaux comportent des moyens pour, avant chaque interaction,
- élaborer une signature à partir du solde enregistré dans la zone solde, à partir du contenu du compteur, et à partir de l'identité enregistrée dans la zone identité,
- vérifier que cette signature correspond à un certificat enregistré dans la zone certificat,
- et en ce que ce système comporte également des moyens pour, à chaque interaction,
- incrémenter le contenu du compteur d'interaction,
- élaborer une nouvelle signature en fonction du solde modifié, du nouveau contenu du compteur d'interaction et de l'identité,
- et enregistrer la nouvelle signature en tant que nouveau certificat dans la carte à mémoire.

2. Système selon la revendication 1, caractérisé en ce que les terminaux d'interaction comportent des moyens pour élaborer une nouvelle signature en application d'un algorithme de type DES.

3. Système selon la revendication 1 ou la revendication 2, caractérisé en ce que les terminaux (2) comportent des moyens pour transmettre à un serveur (10) une identité des cartes à mémoire pour lesquelles la vérification de la signature n'a pas correspondu à un certificat préalablement enregistré dans la zone certificat.

4. Système selon l'une quelconque des revendications 1 à 3, caractérisé en ce que les terminaux (2) comportent des mémoires pour enregistrer, et vérifier en permanence, que l'identité inscrite dans une carte qui est introduite ne figure pas sur une liste noire.

5. Système selon les revendications 1 à 4, caractérisé en ce que la zone mémoire affectée au comptage des interactions ne peut être décrémentée.

6. Système de transfert d'informations par carte à mémoire électronique comportant des cartes à mémoire et un ou des terminaux d'interaction pour interagir sur des informations enregistrées dans ces cartes, ces cartes à mémoire comportant une zone d'identité et une zone de stockage d'informations, ce système comportant des moyens pour modifier au cours de chaque interaction les informations stockées dans la zone de stockage d'informations, caractérisé
- en ce que les cartes à mémoire comportent au moins deux autres zones mémoires: une zone compteur d'interaction, et une zone certificat,
- en ce que les terminaux comportent des moyens pour, avant chaque interaction,
- élaborer une signature à partir des informations stockées dans la zone de stockage d'informations, à partir du contenu du compteur, et à partir de l'identité enregistrée dans la zone identité,
- et vérifier que cette signature correspond à un certificat enregistré dans la zone certificat,
- et en ce que ce système comporte également des moyens pour, à chaque interaction,
- incrémenter le contenu du compteur d'interaction,
- élaborer une nouvelle signature en fonction des informations modifiées, du nouveau contenu du compteur d'interaction, et de l'identité,
- et enregistrer la nouvelle signature en tant que nouveau certificat dans la carte à mémoire.

## Claims

1. Payment system using an electronic memory card as a wallet, comprising memory cards (1) as wallets and one or more interaction terminals (2) to interact on financial balances recorded in these cards, the said memory cards comprising an identity memory zone (3) and a balance memory zone (6), the system comprising means for modifying, in the course of the interaction, the balance recorded in the balance zone, characterised
- in that these memory cards comprise at least two other different memory zones: an interaction counter zone (5) and a certificate zone (4),
- in that the terminals comprise means before each interaction, for
- preparing a signature from the balance recorded in the balance zone, on the basis of the contents of the counter and on the basis of the identity recorded in the identity zone,
- verifying that this signature corresponds to a certificate recorded in the certificate zone,
- and in that this system also comprises means for, each interaction,
- incrementing the contents of the interaction counter,
- preparing a new signature as a function of the modified balance of the new contents of the interaction counter and of the identity,
- and recording the new signature as a new certificate in the memory card.

2. System according to claim 1, characterised in that the interaction terminal, comprise means for preparing a new signature with the application of an algorithm of the type DES.

3. System according to claim 1, characterised in that the terminals (2) comprise means for transmitting to a server (10) an identity of the memory cards for which the verification of the signature has not corresponded to a certificate recorded beforehand in the certificate zone.

4. System according to any one of claims 1 to 3, characterised in that the terminals (2) comprise memories for recording and permanently verifying that the identity entered in a card which has been introduced does not appear on a black list.

5. System according to claims 1 to 4, characterised in that the memory zone allocated to the counting of the interactions cannot be de-incremented.

6. System for transfer of information by electronic memory card, comprising memory cards and one or more interaction terminals designed to interact on items of information recorded in these cards, these memory cards comprising an identity zone and an information storage zone, this system comprising means for modifying, in the course of each interaction, the items of information (1) stored in the information storage zone, characterised
- in that the memory cards comprise at least two other memory zones: an interaction counter zone and a certificate zone,
- in that the terminals comprise means for, prior to each interaction,
- preparing a signature from the items of information stored in the information storage zone, from the contents of the counter and from the identity recorded in the identity zone,
- and verifying that this signature corresponds to a certificate recorded in the certificate zone,
- and in that this system likewise comprises means for, at each interaction,
- incrementing the contents of the interaction counter,
- preparing a new signature as a function of the modified items of information, of the new contents of the interaction counter, and of the identity,
- and recording the new signature as a new certificate in the memory card.

## Patentansprüche

1. System zum Bezahlen mit einer als Geldbörse dienenden elektronischen Speicherkarte, das als Geldbörse dienende elektronische Speicherkarten (1) aufweist, sowie einen oder mehrere Wechselwirkungs-Terminals (2) zur Einwirkung auf in diesen Karten gespeicherte finanzielle Salden, wobei diese Speicherkarten einen IdentifizierungsSpeicherbereich (3) und einen Salden-Speicherbereich (6) aufweisen und das System eine Anordnung zur Veränderung des im Saldenbereich gespeicherten Saldos während jeder Einwirkung aufweist, dadurch gekennzeichnet,
- daß diese Speicherkarten wenigstens zwei weitere unterschiedliche Speicherbereiche aufweisen:
einen Wechselwirkungs-Zählbereich (5) und einen Bestätigungsbereich (4),
- daß die Terminals eine Anordnung aufweisen, um vor jeder Wechselwirkung
- eine Signatur zu erstellen, ausgehend von dem gespeicherten Saldo im Saldenbereich, ausgehend von dem Inhalt des Zählers und ausgehend von der im Identifizierungsbereich gespeicherten Identifizierung,
- zu überprüfen, ob diese Signatur einer im Bestätigungsbereich gespeicherten Bestätigung entspricht,
- und daß das System außerdem eine Anordnung aufweist, um bei jeder Wechselwirkung
- den Inhalt des Wechselwirkungszählers zu erhöhen,
- eine neue Signatur zu erstellen als Funktion des veränderten Saldos, des neuen Inhaltes des Wechselwirkungszählers und der Identifizierung und
- sowohl eine neue Signatur als auch die neue Bestätigung in der Speicherkarte abzuspeichern.

2. System nach Anspruch 1, dadurch gekennzeichnet, daß die Wechselwirkungs-Terminals eine Anordnung aufweisen, um eine neue Signatur unter Verwendung eines Algorithmus vom Typ DES zu erstellen.

3. System nach Anspruch 1 oder Anspruch 2, dadurch gekennzeichnet, daß die Terminals (2) eine Anordnung aufweisen, um einem Dienstleister (10) eine Identifizierung derjenigen Speicherkarten zugänglich zu machen, für die die Überprüfung der Signatur nicht einer vorher gespeicherten Bestätigung im Speicherbereich entspricht.

4. System nach einem der Ansprüche 1 bis 3, dadurch gekennzeichnet, daß die Terminals (2) Speicher aufweisen, um permanent abzuspeichern daß und zu überprüfen ob die in einer eingeführten Karte eingeschriebene Identifizierung auf einer schwarzen Liste erscheint.

5. System nach Ansprüche 1 bis 4, dadurch gekennzeichnet, daß der durch die Zählung der Wechselwirkungen beeinflußte Speicherbereich nicht herabgezählt werden kann.

6. System zur Übertragung von Informationen mittels einer elektronischen Speicherkarte, welches Speicherkarten aufweist sowie einen oder zwei Wechselwirkungs-Terminals, um auf die in diesen Karten gespeicherten Informationen einzuwirken, wobei die Speicherkarten einen Identifizierungsbereich und einen Bereich zur Speicherung von Informationen aufweisen und das System eine Anordnung aufweist, um während jeder Einwirkung die gespeicherten Informationen im Speicherbereich für die Informationen zu verändern, dadurch gekennzeichnet,
- daß die Speicherkarten wenigstens zwei weitere Speicherbereiche aufweisen: einen Bereich zur Zählung der Einwirkungen und einen Bestätigungsbereich,
- daß die Terminals eine Anordnung aufweisen, um vor jeder Einwirkung
- eine Signatur zu erstellen, ausgehend von den im Bereich für die Speicherung der Informationen gespeicherten Informationen, ausgehend vom Inhalt des Zählers und ausgehend von der im Identifizierungsbereich gespeicherten Identifizierung,
- zu überprüfen, daß diese Signatur einer im Bestätigungsbereich gespeicherten Bestätigung entspricht,
- und daß das System außerdem eine Anordnung aufweist, um bei jeder Einwirkung
- den Inhalt des Wechselwirkungszählers zu vergrößern,
- eine neue Signatur zu erstellen als Funktion der veränderten Informationen, des neuen Inhalts des Wechselwirkungszählers und der Identifizierung und
- die neue Signatur sowie die neue Bestätigung in der Speicherkarte abzuspeichern.
